# EUROPÄISCHE PATENTSCHRIFT

(11) **EP 1 109 695 B1**
(45) Veröffentlichungstag und Bekanntmachung des Hinweises auf die Patenterteilung: **27.04.2005**
(21) Anmeldenummer: 00954294.5
(22) Anmeldetag: 29.06.2000
(51) Int. Cl.: B60N 2/02

(54) **ANTRIEBSVORRICHTUNG ZUM VERSTELLEN VON ZU EINEM KRAFTFAHRZEUG GEHÖRENDEN EINRICHTUNGSTEILEN**
CONTROL DEVICE FOR ADJUSTING EQUIPMENT ELEMENTS BELONGING TO A MOTOR VEHICLE
DISPOSITIF DE COMMANDE SERVANT A REGLER DES ELEMENTS D'EQUIPEMENT APPARTENANT A UN VEHICULE AUTOMOBILE

(30) Priorität: 09.07.1999 DE 19932047
(43) Veröffentlichungstag der Anmeldung: 27.06.2001
(73) Patentinhaber: ROBERT BOSCH GMBH, 70442 Stuttgart (DE)
(72) Erfinder: URSEL, Eckhard, D-77815 Buehl (DE); MAENNLE, Erik, D-77704 Oberkirch (DE)
(86) Internationale Anmeldenummer: PCT/DE2000/002123
(87) Internationale Veröffentlichungsnummer: WO 2001/003967

(56) Entgegenhaltungen:
- EP-A- 0 418 516
- US-A- 4 932 290
- US-A- 5 103 691

## Beschreibung

### Stand der Technik

Die Erfindung betrifft eine Antriebsvorrichtung zum Verstellen von zu einem Kraftfahrzeug gehörenden Einrichtungsteilen, insbesondere von Teilen eines Kraftfahrzeugsitzes, nach der Gattung des Hauptanspruchs.

Es sind schon Antriebsvorrichtungen bekannt, die es erlauben verschiedene Einrichtungsteile eines Kraftfahrzeuges mit nur einem Motor zu verstellen, allerdings können diese Einrichtungsteile nicht unabhängig voneinander bewegt werden.

Aus der DE 43 14 248 ist beispielsweise eine Antriebsvorrichtung bekannt, mit der ein wahlweises Verstellen von Kraftfahrzeugeinrichtungsteilen möglich ist. Diese Antriebsvorrichtung umfaßt einen elektrischen Antriebsmotor, der in Richtung der Motorankerdrehachse verschiebbare Kupplungsmittel aufweist, die mit jeweils mit Einrichtungsteilen wirkverbundenen Gegenkupplungsmitteln zusammenarbeiten. Nachteilig bei dieser Antriebsvorrichtung ist, daß die zu bewegenden Teile nicht unabhängig voneinander bewegbar sind, weil immer nur wahlweise die eine oder die andere Kupplung betätigbar ist.

Mit der gattungsgemässen US-A-5,103,691 ist eine Vorrichtung zum motorisierten Verstellen verschiedener Sitzteile mittels eines Motors bekannt geworden. Hierbei sind auf einer Ausgangswelle des Motors Schnecken angeordnet, die mit entsprechenden Schneckenrädern kämmen. Die Schneckenräder werden jeweils von Abtriebswellen durchdrungen und sind in den Schneckenrädern frei drehbar. Dabei können die Abtriebswellen mittels Kupplungselementen kraftschlüssig mit den Schneckenrädern gekoppelt werden.

Die US-A-4 932 290 zeigt eine elektrische Sitzverstell-Vorrichtung, bei der ein reversibler Motor ein Untersetzungsgetriebe mit zwei Stirnzahnrädern antreibt. Die Stirnzahnräder sind mittels Kupplungsvorrichtungen mit axial zu den Stirnzahnrädern angeordneten Abtriebswellen koppelbar.

Eine weitere Vorrichtung zum Verstellen verschiedener Teile eines Automobilsitzes ist in der EP 0 418 516 A2 dargestellt, bei der ein zentrales Zahnrad mit einem Elektromotor angetrieben wird. Um das zentrale Antriebszahnrad sind in gleichen Abständen mehrere Zahnräder angeordnet, die drehfest mit entsprechenden Abtriebswellen verbunden sind. Mittels eines Planetenrads, das ständig im Eingriff mit dem zentralen Zahnrad ist kann wahlweise eines der Abtriebszahnräder angetrieben werden.

Aus der PCT/US 97/07718 ist eine Vorrichtung zur Sitzverstellung bekannt, die wegen der Kombination von elektromechanischer Verstellung und pneumatischer Verstellung ebenfalls nur einen universellen Motor benötigt. Bei dieser Vorrichtung steht der Motor wahlweise mit einer relativ lauten Pumpe der pneumatischen Verstelleinrichtung zur Befüllung von Luftsäcken oder mit einer mechanischen Verstelleinrichtung in Verbindung. Bei lange andauender Verstellung kann es passieren, daß sich die Luftsäcke entleeren während der Motor gerade auf die mechanische Verstelleinrichtung wirkt. Eine völlige Unabhängigkeit der verschiedenen Abtriebselemente ist somit auch hier nicht gewährleistet.

### Vorteile der Erfindung

Die erfindungsgemäße Antriebsvorrichtung zum Verstellen von zu einem Kraftfahrzeug gehörenden Einrichtungsteilen mit den Merkmalen des Hauptanspruchs hat nicht nur den Vorteil, daß verschiedene Abtriebselemente von einem einzigen elektrischen Antriebsmotor angetrieben werden können, sondern auch den entscheidenden weiteren Vorteil, daß die verschiedenen Abtriebselemente der Antriebseinheit unabhängig voneinander sind.

Bei der erfindungsgemäßen Antriebsvorrichtung entfällt die Notwendigkeit pro Abtriebselement je einen Antriebsmotor einzusetzen. Dadurch lassen sich deutliche Gewichts- und Kostenvorteile erzielen. Darüberhinaus läßt sich die Antriebsvorrichtung sehr kompakt bauen, was einen weiteren Vorteil darstellt.

Durch die in den Unteransprüchen angegebenen Maßnahmen sind vorteilhafte Weiterbildungen der Vorrichtungen nach dem Hauptanspruch möglich.

So ist es von Vorteil, wenn die mindestens zwei Kupplungen je einen Kupplungsaktuator zum Betätigen der Kupplungen aufweisen. Diese Kupplungsaktuatoren sind einzeln und unabhängig voneinander ansteuerbar, womit auch die Kraftübertragung vom elektrischen Antriebsmotor über die jeweiligen Kupplungen auf die jeweiligen Abtriebselemente gezielt und unabhängig voneinander erfolgen kann.

Diese Kupplungsaktuatoren können beispielsweise Axialhubmotoren sein, die mit einer in axialer Richtung verschiebbarer Spindel ausgestattet sind, und mit je einem ersten Kupplungselement der mindestens zwei Kupplungen in Wirkverbindung stehen.

Eine besonders kompakte Ausführung der erfindungsgemäßen Antriebsvorrichtung erreicht man, wenn die mindestens zwei Kupplungen an den jeweils beiden Enden der mindestens einen Hilfswelle angeordnet sind. Diese benachbarte Anordnung der Kupplungsaktuatoren ermöglicht einen symmetrischen, platzsparenden und höchst praktischen Aufbau der Antriebsvorrichtung.

Eine besonders vorteilhafte Ausführung der Kupplungen wird erreicht, wenn die Kupplungen aus je einem ersten und einem zweiten Kupplungselement bestehen. Wichtig ist, daß das mit dem Kupplungsaktuator in Wirkverbindung bringbare erste Kupplungselement drehfest und das mit der Abtriebseinheit in Verbindung stehende zweite Kupplungselement drehbar mit der Hilfswelle verbunden ist. Nur so ist eine gezielte Beeinflussung der Kraftübertragung möglich. Die beiden Kupplungselemente sind so ausgeführt, daß im eingekuppelten Zustand eine reibschlüssige und im ausgekuppelten Zustand möglichst keine Verbindung zwischen den sich berührenden Flächen der beiden Elemente besteht.

Sind die benachbart zu den ersten Kupplungselementen angeordneten Kupplungsaktuatoren mit dem jeweils ersten Kupplungselement in Wirkverbindung zu bringen, dann kann die Kraft des elektrischen Antriebsmotors gezielt auf die einzelnen Abtriebselemente unabhängig voneinander verteilt werden.

In einer vorteilhaften Variante umfassen die mindestens zwei Abtriebselemente der Abtriebseinheit mit Abtriebswellen verbundene Abtriebsschneckenräder, deren Verzahnungen beispielsweise mit je einer Schneckenverzahnung der jeweils zweiten Kupplungselemente kämmen.

Der Einsatz von Schneckengetrieben ermöglicht darüberhinaus eine selbsthemmende Bauweise, die eine unerwünschte Verstellung der zu verstellenden Einrichtungsteile verhindert. Somit sind keine aufwendigen Maßnahmen zur Fixierung der zu bewegenden Teile erforderlich.

Ein großer Vorteil ergibt sich auch, wenn die Abtriebsschneckenräder unterschiedliche Durchmesser aufweisen, bzw. wenn Abtriebsschneckenräder mit unterschiedlichen Durchmessern einsetzbar sind. Dann besteht die Möglichkeit die Übersetzungsverhältnisse zu variieren und die an den Abtriebsschneckenrädern anliegenden Drehmomente optimal an die jeweiligen Anforderungen für die zu verstellenden Teile anzupassen.

Beispielsweise kann dann der Tatsache Rechnung getragen werden, daß bei der Verstellung eines Fahrzeugsitzes z.B. die Lehnenverstellung einen geringeren Kraftaufwand erfordert als die Längs- oder die Höhenverstellung des Fahrzeugsitzes.

Ist der Antriebsmotor zentral angeordnet, also beispielsweise genau zwischen den mindestens zwei Kupplungen, dann ist ein besonders kompakter Aufbau der Antriebsvorrichtung möglich und die im Betrieb auftretenden Belastungen werden optimal auf die Antriebsvorrichtung verteilt.

Durch ein mit der Antriebsvorrichtung in Verbindung stehendes Steuergerät besteht die vorteilhafte Möglichkeit, eine kontrollierte und gezielte Ansteuerung der einzelnen Abtriebselemente der Antriebsvorrichtung durchzuführen.

### Zeichnung

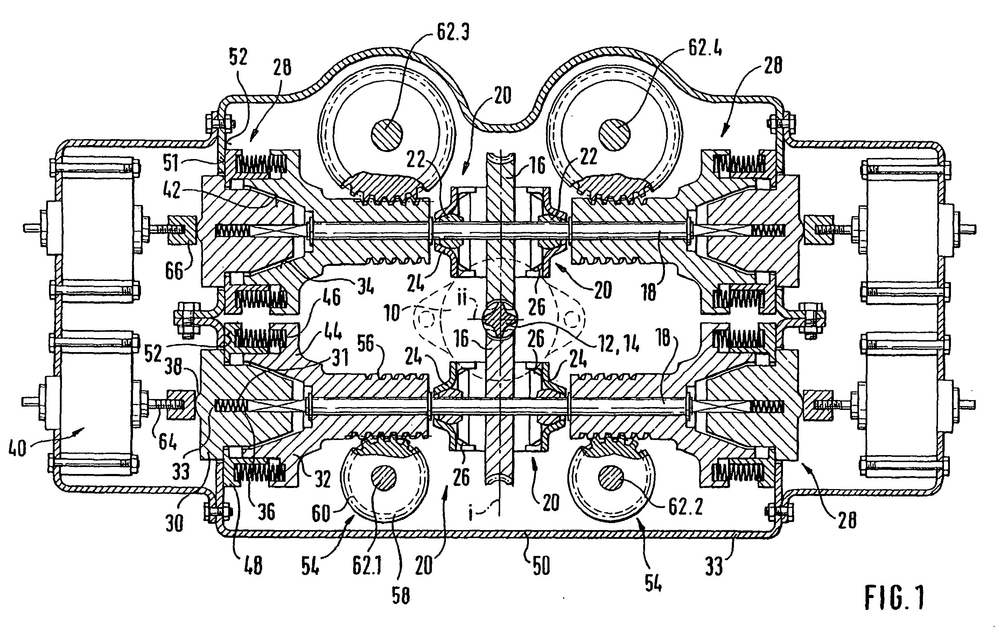

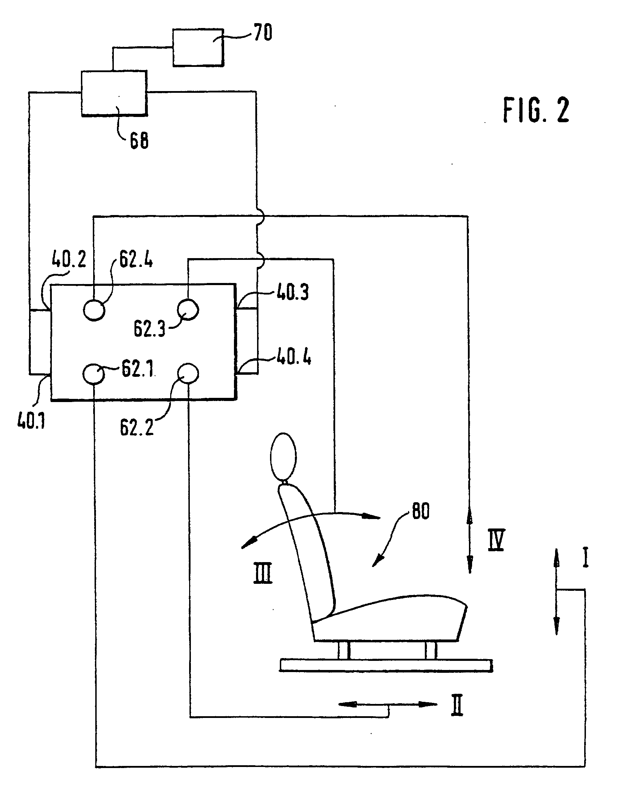

In der Zeichnung ist ein Ausführungsbeispiel einer erfindungsgemäßen Antriebsvorrichtung dargestellt und in der nachfolgenden Beschreibung näher erläutert. Figur 1 zeigt das Ausführungsbeispiel im Schnitt in einer Ansicht von oben, und Figur 2 zeigt schematisch die Anbindung des Ausführungsbeispiels aus Figur 1 an einen Kraftfahrzeugsitz.

### Beschreibung des Ausführungsbeispiels

Die in Figur 1 dargestellte Antriebsvorrichtung zum Verstellen von zu einem Kraftfahrzeug gehörenden Einrichtungsteilen weist einen elektrischen Antriebsmotor 10 mit einer Antriebsmotorwelle 12 und einer daran angeordneten Schnecke 14 auf. Die Schnecke 14 kämmt mit ihrer Schneckenverzahnung mit den Verzahnungen zweier Schneckenräder 16, die in einer Linie i oberhalb und unterhalb der Schnecke 14 angeordnet sind.

Die Mittellinie ii durch den Antriebsmotor 10 bzw. die Antriebsmotorwelle 12 steht senkrecht auf der Mittellinie i und bildet eine Normale zur Papierebene.

Zwei Hilfswellen 18 sind jeweils drehfest mit den beiden Schneckenrädern 16 verbunden und werden jeweils an zwei Lagerstellen 20 links und rechts von den Schneckenrädern 16 gehalten. Die Lagerung der Hilfswellen 18 an den Lagerstellen 20 erfolgt mit Kalottenlagern 22, die die Hilfswellen 18 umgeben und jeweils von einer mit dem Gehäuse 50 der Antriebsvorrichtung fest verbundenen Lageraufnahme 24 aufgenommen sind. Sie werden von je einem dünnen Blechteil 26 (Speednut) gegen Herausfallen gesichert.

An den beiden Enden der als Hohlwellen ausgeführten Hilfswellen 18 sind jeweils Kupplungen 28 angeordnet, die ein erstes Kupplungselement 30 und ein zweites Kupplungselement 32 aufweisen. In das erste Kupplungselement 30 ist eine zentrische Ausnehmung 31 (Sackloch) eingarbeitet, in die das Ende eines in der Hilfswelle 18 geführten Stabes 19 ragt. Damit liegt eine drehfeste und axial verschiebbare Verbindung des ersten Kupplungselementes 30 mit dem Stab 19 der Hilfswelle 18 vor.

Das erste Kupplungselement 30 weist auf dem dem zweiten Kupplungselement 32 zugewandten Ende einen Reibkegel 34 auf. In der Ausnehmung 31 befindet sich zusätzlich eine Feder 36, die mit ihrem einen Ende am Ende des Stabes 19 und mit ihrem anderen Ende am Boden 33 der Ausnehmung 31 anliegt. Sie drückt einen Ansatz 38 des ersten Kupplungselementes 30 gegen einen noch zu beschreibenden Kupplungsaktuator 40 und sorgt dafür, daß das erste Kupplungselement ständig in Wirkverbindung mit dem Kupplungsaktuator 40 steht.

Das zweite Kupplungselement ist umlaufend drehbar auf der Hilfswelle 18 gelagert und weist einen Innenkegel 42 auf, dessen Form dem Reibkegel 34 des ersten Kupplungselementes 30 entspricht.

Das zweite Kupplungselement 32 ist an seinem äußeren Umfang 44 über mehrere Druckfedern 46 mit einem das erste und das zweite Kuplungselement 30 bzw. 32 umfassenden Druckring 48 verbunden. Die dem Gehäuse 50 zugewandte Fläche 51 des Druckrings 48 steht in ausgekuppelten Zustand der Kupplung 28 in Reibkontakt mit einer Innenfläche 52 des Gehäuses 50. Dieser reibschlüssige Kontakt unterstützt die Selbsthemmung der Abtriebsschneckengetriebeanordnung bestehend aus dem zweiten Kupplungselement 32 und den noch zu beschreibenden Abtriebselementen 54. Im eingekuppelten Zustand der Kupplungen 28 werden die Druckfedern 26 zusammengedrückt, wodurch sich die reibschlüssigen Kontakte lösen. Damit wird eine im Betrieb unerwünschte Behinderung der Kraftübertragung vom Antriebsmotor 10 über die Kupplungen 28 auf die einzelnen Abtriebselemente 54 vermieden.

Das zweite Kupplungselement 32 weist eine Schneckenverzahnung 56 auf, die sich weitgehend über seinen Lagerbereich an der Hilfswelle 18 erstreckt. Diese Schneckenverzahnung 56 steht mit einer Verzahnung 58 des Abtriebselementes 54 in Wirkverbindung. Die vier Abtriebselemente 54 des Ausführungsbeispiels umfassen je ein Abtriebsschneckenrad 60 sowie je eine damit verbundene Abtriebswelle 62, an die die zu verstellenden Einrichtungsteile angebunden sind.

Die Betätigung der Kupplungen 28 bzw. der ersten Kupplungslemente 30 erfolgt über je einen Kupplungsaktuator 40. Diese Kupplungsaktuatoren 40 sind in dem gezeigten Ausführungsbeispiel als Axialhubmotoren ausgeführt, die eine axial verschiebbare Spindel 64 aufweisen. Auf dem den Kupplungsaktuatoren 40 abgewandten Enden der Gewindespindeln 64 sind Kopplungselemente 66 aus elastischem, nicht allzu weichem Material angeordnet, die auf die Ansätze 38 wirken und ein weiches Ein- und Auskuppeln der Kupplungen 28 sicherstellen.

In Figur 2 ist die Anbindung des Ausführungsbeispiels aus Figur 1 an eine Kraftfahrzeugsitz schematisch dargestellt.

Die vier Ausgänge 40.1 bis 40.4 der Kupplungsaktuatoren 40 sind mit einem übergeordneten Steuergerät 68 verbunden, das eine kontrollierte und gezielte Ansteuerung der einzelnen Kupplungsaktuatoren 40 über ein damit verbundenes Bedienteil 70 unabhängig voneinander ermöglicht.

Die vier Abtriebswellen 62.1 bis 62.4 sind in dem gezeigten Ausführungsbeispiel mit vier verschiedenen Verstellmechanismen I bis IV eines Fahrzeugsitzes 80 verbunden. Dabei stehen konkret die beiden Abtriebswellen 62.1 und 62.2 mit der kleineren Übersetzung mit den Verstellmechanismen I und II für die Sitzhöhenverstellung und die Sitzlängsverstellung, und die beiden Abtriebswellen 62.3 und 62.4 mit der größeren Übersetzung mit den Verstellmechanismen III und IV für die Sitzlehnenverstellung und die vordere Sitzflächenhöhenverstellung in Verbindung.

Die erfindungsgemäße Antriebsvorrichtung ist nicht auf das in den Figuren 1 und 2 dargestellte Ausführungsbeispiel beschränkt, es sind noch weitere Ausführungen denkbar, beispielsweise eine Antriebsvorrichtung mit bis zu acht Abtriebselementen, bei der ein entsprechend starker Motor zwei der in Figur 1 dargestellten, hintereinander angeordneten Module antreibt.

Prinzipiell vorstellbar ist auch der Einsatz anderer Getriebetechniken und Kupplungsmechanismen, entscheidend ist lediglich die Unabhängigkeit der einzelnen Abtriebselemente voneinander.

## Patentansprüche

1. Antriebsvorrichtung zum Verstellen von zu einem Kraftfahrzeug gehörenden Einrichtungsteilen, insbesondere von Teilen eines Kraftfahrzeugsitzes, mit einem elektrischen Antriebsmotor (10), der eine Antriebsmotorwelle (12) und eine daran angeordnete Schnecke (14) umfasst, ferner mit einer mechanischen Verstellvorrichtung, die mindestens ein mit der Schnecke (14) zusammenwirkendes Schneckenrad (16), eine Kupplungseinheit und eine Abtriebseinheit umfasst, **dadurch gekennzeichnet, dass** die Kupplungseinheit mindestens zwei Kupplungen (28) aufweist, die an mindestens einer mit dem mindestens einen Schneckenrad (16) drehfest verbundenen Hilfswelle (18) angeordnet sind und den Antriebsmotor (10) an mindestens zwei radial zu der mindestens einen Hilfswelle (18) angeordneten Abtriebselemente (54) der Abtriebseinheit unabhängig voneinander ankoppeln.

2. Antriebsvorrichtung nach Anspruch 1, **dadurch gekennzeichnet, daß** die mindestens zwei Kupplungen (28) je einen Kupplungsaktuator (40) zum Betätigen der Kupplungen (28) aufweisen.

3. Antriebsvorrichtung nach Anspruch 1 oder 2, **dadurch gekennzeichnet, daß** die mindestens zwei Kupplungen (28) an den jeweils beiden Enden der mindestens einen Hilfswelle (18) angeordnet sind.

4. Antriebsvorrichtung nach einem der Ansprüche 1 bis 3, **dadurch gekennzeichnet, daß** die mindestens zwei Kupplungen (28) je ein erstes Kupplungselement (30) und ein zweites Kupplungselement (32) aufweisen.

5. Antriebsvorrichtung nach Anspruch 4, **dadurch gekennzeichnet, daß** das je erste Kupplungselement (30) drehfest mit der mindestens einen Hilfswelle (18) verbunden ist.

6. Antriebsvorrichtung nach Anspruch 4 und 5, **dadurch gekennzeichnet, daß** das je zweite Kupplungselement (32) drehbar mit der mindestens einen Hilfswelle (18) verbunden ist.

7. Antriebsvorrichtung nach einem der Ansprüche 2 bis 6, **dadurch gekennzeichnet, daß** die Kupplungsaktuatoren (40) benachbart zu den ersten Kupplungselementen (30) an den beiden Enden der mindestens einen Hilfswelle (18) angeordnet sind.

8. Antriebsvorrichtung nach einem der Ansprüche 4 bis 7, **dadurch gekennzeichnet, daß** die Kupplungsaktuatoren (40) mit dem je ersten Kupplungselement (30) in Wirkverbindung bringbar sind.

9. Antriebsvorrichtung nach einem der vorhergehenden Ansprüche, **dadurch gekennzeichnet, daß** die mindestens zwei Abtriebselemente (54) der Abtriebseinheit mit Abtriebsschneckenrädern (60) verbundene Abtriebswellen (62) sind.

10. Antriebsvorrichtung nach Anspruch 9, **dadurch gekennzeichnet, daß** die zweiten Kupplungselemente (32) jeweils eine Schneckenverzahnung aufweisen, die mit den Abtriebsschneckenrädern (60) in Wirkverbindung stehen.

11. Antriebsvorrichtung nach einem der Ansprüche 9 oder 10, **dadurch gekennzeichnet, daß** die Abtriebsschneckenräder (60) unterschiedliche Durchmesser aufweisen.

12. Antriebsvorrichtung nach einem der vorhergehenden Ansprüche, **dadurch gekennzeichnet, daß** die Abtriebseinheit selbsthemmend ausgebildet ist.

13. Antriebsvorrichtung nach einem der vorhergehenden Ansprüche, **dadurch gekennzeichnet, daß** der Antriebsmotor (10) zentral angeordnet ist.

14. Antriebsvorrichtung nach einem der vorhergehenden Ansprüche, **dadurch gekennzeichnet, daß** ein übergeordnetes Steuergerät (68) mit den Kupplungsaktuatoren (40) verbunden ist.

## Claims

1. Drive device for adjusting equipment elements belonging to a motor vehicle, in particular elements of a motor vehicle seat, having an electric drive motor (10) which comprises a drive-motor shaft (12) and a worm (14) arranged thereon, furthermore having a mechanical adjusting device which comprises at least one worm wheel (16) interacting with the worm (14), and a coupling unit and an output unit, **characterized in that** the coupling unit has at least two couplings (28) which are arranged on at least one auxiliary shaft (18), connected in a rotationally fixed manner to the at least one worm wheel (16), and couple the drive motor (10) to at least two output elements (54) of the output unit, which elements are arranged radially to the at least one auxiliary shaft (18), independently of each other.

2. Drive device according to Claim 1, **characterized in that** the at least two couplings (28) have a respective coupling actuator (40) for actuating the couplings (28).

3. Drive device according to Claim 1 or 2, **characterized in that** the at least two couplings (28) are arranged at both ends in each case of the at least one auxiliary shaft (18).

4. Drive device according to one of Claims 1 to 3, **characterized in that** the at least two couplings (28) each have a first coupling element (30) and a second coupling element (32).

5. Drive device according to Claim 4, **characterized in that** the first coupling element (30) in each case is connected to the at least one auxiliary shaft (18) in a rotationally fixed manner.

6. Drive device according to Claims 4 and 5, **characterized in that** the second coupling element (32) in each case is connected rotatably to the at least one auxiliary shaft (18).

7. Drive device according to one of Claims 2 to 6, **characterized in that** the coupling actuators (40) are arranged adjacent to the first coupling elements (30) at both ends of the at least one auxiliary shaft (18).

8. Drive device according to one of Claims 4 to 7, **characterized in that** the coupling actuators (40) can be brought into operative connection with the first coupling element (30) in each case.

9. Drive device according to one of the preceding claims, **characterized in that** the at least two output elements (54) of the output unit are output shafts (62) connected to output worm wheels (60).

10. Drive device according to Claim 9, **characterized in that** the second coupling elements (32) each have a worm toothing, which toothings are operatively connected to the output worm wheels (60).

11. Drive device according to either of Claims 9 and 10, **characterized in that** the output worm wheels (60) have different diameters.

12. Drive device according to one of the preceding claims, **characterized in that** the output unit is of self-locking design.

13. Drive device according to one of the preceding claims, **characterized in that** the drive motor (10) is arranged centrally.

14. Drive device according to one of the preceding claims, **characterized in that** a master control unit (68) is connected to the coupling actuators (40).

## Revendications

1. Dispositif d'entraînement servant à régler des éléments d'équipement d'un véhicule automobile, en particulier des éléments d'un siège de véhicule, doté d'un moteur électrique (10) comprenant un arbre de moteur (12) et une vis sans fin (14) disposée sur cet arbre, ainsi que d'un dispositif de réglage mécanique composé d'au moins une roue tangente (16) agissant conjointement avec la vis sans fin (14), d'une unité d'embrayage et d'une unité de sortie,
**caractérisé en ce que**
l'unité d'embrayage présente au moins deux embrayages (28) disposés sur au moins un arbre auxiliaire (18) relié fixement à la roue tangente (16) et accouplant indépendamment l'un de l'autre le moteur (10) à au moins deux éléments de sortie (54) de l'unité de sortie disposés radialement par rapport à l'arbre auxiliaire (18).

2. Dispositif de commande selon la revendication 1,
**caractérisé en ce que**
les embrayages (28) présentent chacun un actionneur d'embrayage (40) pour actionner les embrayages (28).

3. Dispositif de commande selon la revendication 1 ou 2,
**caractérisé en ce que**
les au moins deux embrayages (28) sont disposés chacun sur les deux extrémités de l'arbre auxiliaire (18).

4. Dspositif de commande selon l'une quelconque des revendications 1 à 3,
**caractérisé en ce que**
les embrayages (28) présentent chacun un premier élément d'accouplement (30) et un deuxième élément d'accouplement (32).

5. Dispositif de commande selon la revendication 4,
**caractérisé en ce que**
chaque premier élément d'accouplement (30) est relié fixement à l'arbre auxiliaire (18).

6. Dispositif de commande selon la revendication 4 ou 5,
**caractérisé en ce que**
chaque deuxième élément d'accouplement (32) est relié avec rotation possible à l'arbre auxiliaire (18).

7. Dispositif de commande selon l'une quelconque des revendications 2 à 6,
**caractérisé en ce que**
les actionneurs d'embrayage (40) sont disposés à côté des premiers éléments d'accouplement (30) sur les deux extrémités de l'arbre auxiliaire (18).

8. Dispositif de commande selon l'une quelconque des revendications 4 à 7,
**caractérisé en ce que**
les actionneurs d'accouplement (40) peuvent être amenés en relation active avec chaque premier élément d'accouplement (30).

9. Dispositif de commande selon l'une quelconque des revendications précédentes,
**caractérisé en ce que**
les au moins deux éléments de sortie (54) de l'unité de sortie sont des arbres de sortie (62) reliés à des roues tangentes de sortie (60).

10. Dispositif de commande selon la revendication 9,
**caractérisé en ce que**
les deuxièmes éléments d'accouplement (32) présentent respectivement une denture hélicoïdale qui est en liaison active avec les roues tangentes de sortie (60).

11. Dispositif de commande selon l'une quelconque des revendications 9 ou 10,
**caractérisé en ce que**
les roues tangentes de sortie (60) présentent différents diamètres.

12. Dispositif de commande selon l'une quelconque des revendications précédentes,
**caractérisé en ce que**
la conception de l'unité de sortie est autobloquante.

13. Dispositif de commande selon l'une quelconque des revendications précédentes,
**caractérisé en ce que**
le moteur (10) est placé au centre.

14. Dispositif de commande selon l'une quelconque des revendications précédentes,
**caractérisé en ce qu'**
un appareil de commande (68) supérieur est relié aux actionneurs d'embrayage (40).
